# EUROPEAN PATENT APPLICATION

(11) **EP 4 681 988 A1**
(43) Date of publication of application: **21.01.2026**
(21) Application number: 24774685.2
(22) Date of filing: 06.03.2024
(51) Int. Cl.: B60Q 1/00, B60Q 1/04

(54) **LIGHT-FIXTURE SYSTEM, LAMP CONTROLLER, AND CONTROL METHOD**

(30) Priority: 17.03.2023 JP 2023043198
(71) Applicant: Koito Manufacturing Co., Ltd., Shinagawa-ku, Tokyo 141-0001 (JP)
(72) Inventor: KIHARA, Satoshi, Shizuoka-shi Shizuoka 4248764 (JP)
(74) Representative: Algemeen Octrooi- en Merkenbureau B.V.
(86) International application number: PCT/JP2024/008564
(87) International publication number: WO 2024/195545

(57) **Abstract**

In a lamp system 100, a high-definition lamp unit 110 has a plurality of pixels PIX individually controllable in response to an input image IMG1, and is structured to illuminate a road face with a beam BM having a light distribution pattern that corresponds to states of the pixels PIX. A sensor 120 is structured to detect vibration of a vehicle body. A controller 200 is structured to narrow a dimension in the direction of the vibration of a figure contained in a source image IMGO that specifies a pattern to be projected on the road face, thereby correcting the source image.

## Description

### TECHNICAL FIELD

The present disclosure relates to a vehicle lamp apparatus.

### BACKGROUND ART

Vehicle lamp apparatuses are generally designed to be switchable between low beam illumination and high beam illumination. The low beam illumination aims to illuminate a nearby area of a host vehicle with a predetermined illuminance, whose light distribution is regulated by law so as not to cast glare on oncoming car or preceding car, and is mainly used during travel in an urban area. On the other hand, the high beam illumination aims to illuminate a wide and far front area with a relatively high illuminance, and is mainly used during high-speed travel on roads with less traffic of oncoming car or preceding car. The high beam illumination, which is superior to the low beam illumination in terms of visibility by the driver, has however suffered from a problem of casting glare to vehicle driver or pedestrian ahead of the vehicle.

There is a recent proposal on adaptive driving beam (ADB) technology for dynamically and adaptively controlling a high beam light distribution pattern, with reference to surrounding situation of the vehicle. The ADB technology is designed to detect the preceding vehicle and the oncoming vehicle (collectively referred to as front vehicles), or the pedestrian and traffic signs (collectively referred to as targets) ahead of the host vehicle, and to shade or dim an area that corresponds to the vehicles, thereby reducing the glare possibly cast on the vehicles.

A technique has been proposed, by which figures or characters for driving assistance are projected on road faces, with use of a lamp having high spatial resolution.

### RELATED-ART LITERATURE

### PATENT LITERATURE

Patent Literature 1: WO 2020/262445 A1

### SUMMARY OF INVENTION

### TECHNICAL PROBLEM

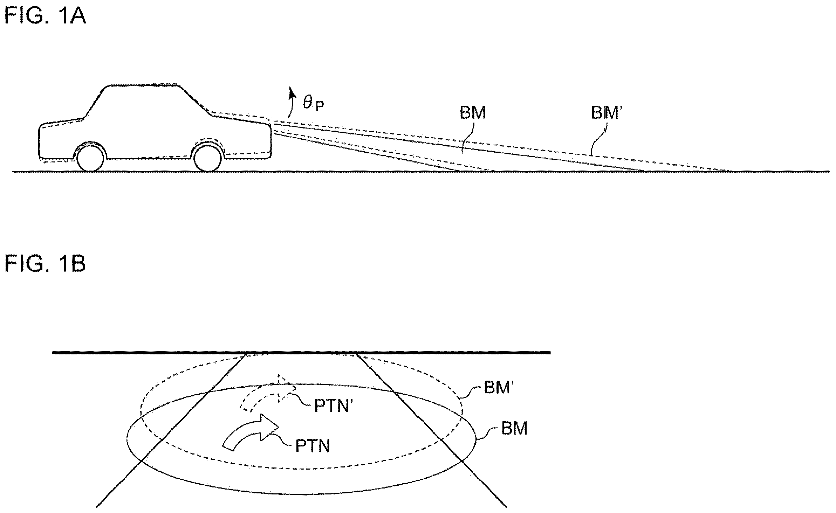

Fig. 1 is a diagram explaining a problem that occurs in road projection. Posture (pitch angle) θp of a vehicle body dynamically changes during travel of the vehicle, while being affected by step or irregularity on the road face. Upon change in posture of the vehicle body, an optical axis of road projection beam BM will change, whereby position of projection of a pattern on the road face will change. Fig. 1 illustrates how a pattern is projected upon occurrence of large vibration

For a change in the position of projection, which is ascribed to change in the pitch angle θp slow enough to be followed by human eyes, it suffices to control the lamp so that the pattern is projected on a stationary position (relative to the vehicle body) on the road face following the change in the pitch angle θp.

Rapid change in the pitch angle will, however, blur a figure projected on the road face, thus degrading the visibility.

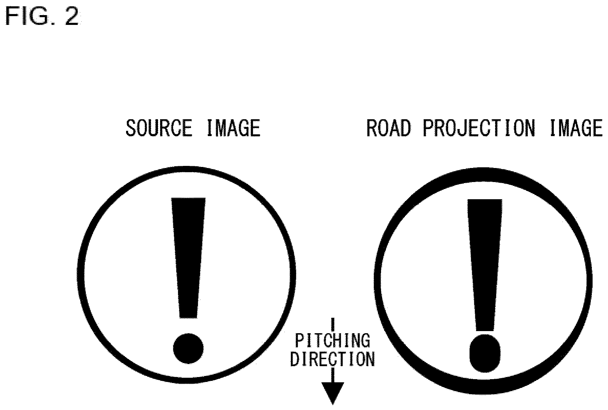

Fig. 2 is a diagram illustrating patterns projected on the road face. The left pattern in Fig. 2 represents a source image to be projected on the road face, and the right pattern in Fig. 2 represents an image (projected image) actually projected on the road face. Upon rapid change in the pitch angle θp within a narrow range, the figure that constitutes the pattern is visually recognized by human including a driver, while being stretched in the front-rear direction relative to the vehicle body. This would bring the figures closer to each other, or skew a proportion of the figures, thereby degrading the visibility.

Note that this problem was uniquely recognized by the present inventors, and should not be regarded as a common recognition of those skilled in the art.

The present disclosure has been arrived at in such circumstances, where one of exemplary purposes thereof is to improve visibility of the road projection.

### SOLUTION TO PROBLEM

One mode of the present disclosure relates to a lamp system. The lamp system includes: a variable light distribution lamp including a plurality of pixels individually controllable in response to an input image, and being structured to illuminate a road face with a beam having a light distribution pattern that corresponds to states of the pixels; a sensor structured to detect vibration of a vehicle body; and a controller structured to generate the input image. The controller is structured to generate the input image, by narrowing a dimension of a figure contained in a source image, that specifies a pattern to be projected on the road face, in a direction corresponding to the vibration.

Another mode of the present disclosure relates to a method for controlling the variable light distribution lamp. The variable light distribution lamp includes a plurality of pixels individually controllable in response to an input image, and is structured to illuminate a road face with a beam having a light distribution pattern that corresponds to states of the pixels. The control method includes: detecting vibration of a vehicle body; generating a source image that specifies a pattern to be projected on the road face; and generating the input image, by narrowing a dimension of a figure contained in a source image, that specifies a pattern to be projected on the road face, in a direction corresponding to the vibration.

Note that also free combinations of these constituents, and also any of the constituents and expressions exchanged among the method, apparatus and system, are valid as the modes of the present invention or the present disclosure. Also note that the description of this section (SOLUTION TO PROBLEM) does not describe all essential features of the invention, and thus also subcombinations of these features described may constitute the invention.

### ADVANTAGEOUS EFFECTS OF INVENTION

According to one mode of the present disclosure, visibility of the road projection may be improved.

### BRIEF DESCRIPTION OF DRAWINGS

[Fig. 1] Fig. 1 is a drawing illustrating a problem that occurs in road projection.
[Fig. 2] Fig. 2 is a diagram illustrating patterns projected on a road face.
[Fig. 3] Fig. 3 is a block diagram illustrating a lamp system according to one embodiment.
[Fig. 4] Fig. 4 is a functional block diagram of a controller according to one Example.
[Fig. 5] Fig. 5 is a diagram for explaining a correction process by the controller.
[Fig. 6] Fig. 6 is a diagram for explaining a specific example of the correction process.
[Fig. 7] Fig. 7 is a diagram for explaining a specific example of the correction process.
[Fig. 8] Fig. 8 is a diagram for explaining the correction process depending on the magnitude of the vibration.
[Fig. 9] Fig. 9 is a diagram for explaining the correction process depending on the magnitude of the vibration.
[Fig. 10] Fig. 10 is a diagram illustrating exemplary correction control.

### DESCRIPTION OF EMBODIMENTS

### (Outline of Embodiments)

Some exemplary embodiments of the present disclosure will be outlined. This outline is intended for briefing some concepts of one or more embodiments, for the purpose of basic understanding of the embodiments, as an introduction before detailed description that follows, without limiting the scope of the invention or disclosure. Also note this outline is not an extensive overview of all possible embodiments, and is therefore not intended to limit any constituent indispensable for the embodiments. For convenience, the term "one embodiment" may be used to designate one embodiment (Example or Modified Example), or a plurality of embodiments (Examples or Modified Examples) disclosed in the present specification.

The lamp system according to one embodiment includes: a variable light distribution lamp including a plurality of pixels individually controllable in response to an input image, and being structured to illuminate a road face with a beam having a light distribution pattern that corresponds to states of the pixels; a sensor structured to detect vibration of a vehicle body; and a controller structured to generate the input image. The controller is structured to generate the input image, by narrowing a dimension of a figure contained in a source image, that specifies a pattern to be projected on the road face, in a direction corresponding to the vibration.

Upon detection of the vibration, this structure causes projection, on the road face, of an image having the width or length shrunk in the direction of the vibration, and trembling at high speed, which is recognizable by the human eyes as a pattern having an appropriate width in the direction of the vibration same as that of the source image. This successfully enhances the visibility.

In one embodiment, the direction corresponding to the vibration may be the pitching direction. The vehicle body is likely to be shaken in the front-rear direction because of its structure. Such vibration may therefore be detected, and the dimension (width or length) in the front-rear direction of the figure may be narrowed, whereby the visibility is successfully enhanced by a simple control.

In one embodiment, a degree to which the dimension is narrowed may be dependent on a magnitude of the vibration. This successfully enhances dimensional accuracy of the figure in the front-rear direction.

In one embodiment, a value of each pixel in the input image may be a logical AND of a value of a corresponding pixel in the source image and values of n adjacent pixels in the direction corresponding to the vibration, where n is an integer equal to or greater than one.

In one embodiment, the number n dynamically changes in response to the vibration thus detected. This successfully controls the degree of narrowing depending on the number n. The amount of correction may be zeroed by setting n = 0.

### (Embodiments)

Preferred embodiments will be explained below, referring to the attached drawings. All similar or equivalent constituents, members and processes illustrated in the individual drawings will be given same reference signs, so as to properly avoid redundant explanations. The embodiments are merely illustrative, and are not restrictive about the disclosure. All features and combinations thereof described in the embodiments are not always essential to the disclosure.

In the present specification, a "state in which a member A is coupled to a member B" includes a case where the member A and the member B are physically and directly coupled, and a case where the member A and the member B are indirectly coupled while placing in between some other member that does not substantially affect the electrically coupled state, or does not degrade the function or effect demonstrated by the coupling thereof.

Similarly, a "state in which member C is provided between member A and member B" includes a case where the member A and the member C, or the member B and the member C are directly coupled, and a case where they are indirectly coupled, while placing in between some other member that does not substantially affect the electrically coupled state among the members, or does not degrade the function or effect demonstrated by the coupling thereof.

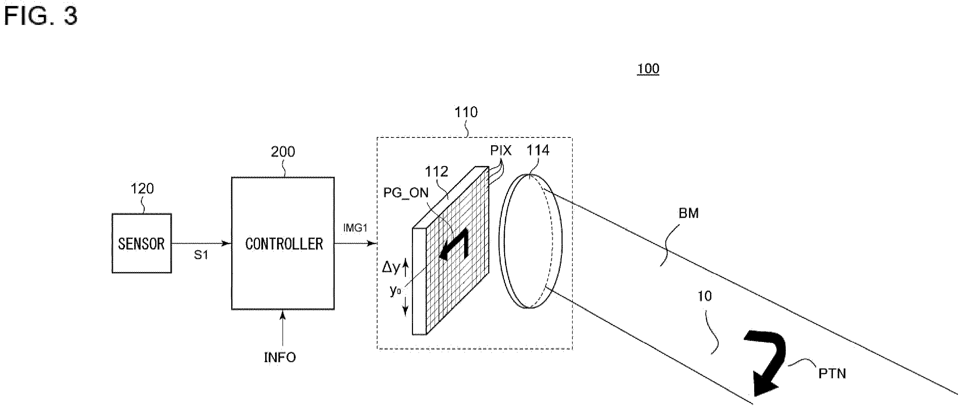

Fig. 3 is a block diagram illustrating a lamp system 100 according to one embodiment. The lamp system 100 is a road projection lamp that is mounted on an automobile, and illuminates a road face ahead of the vehicle.

The lamp system 100 has a high-definition lamp unit 110, a sensor 120, and a controller 200.

In this embodiment, the high-definition lamp unit 110 is a variable light distribution lamp which is structured to illuminate the road face ahead of the vehicle with beam. The high-definition lamp unit 110 has a plurality of individually controllable pixels PIX, and is structured to illuminate the road face with beam (referred to as road illumination beam) BM having a light distribution pattern that corresponds to states of the pixels PIX. For example, the high-definition lamp unit 110 has a light-emitting element array 112, and an illumination optical system 114. The light-emitting element array 112 usable herein may be an LED array.

The states of each pixel PIX, that is, luminance is controlled according to the corresponding pixel of the input image IMG1. The luminance of each pixel PIX may be controlled in two gradations between ON and OFF, or may be controlled in multiple gradations. The multi-gradation control may be designed to express multiple gradations based on PWM dimming, by which time ratio (duty cycle) of on-time and off-time of each pixel PIX is modulated. In this embodiment, the luminance of the pixel PIX will be defined to be controllable in two gradations between ON and OFF, to simplify the explanation.

The illumination optical system 114 is structured to project an output light from the light-emitting element array 112, ahead of a vehicle. The illumination optical system 114 may be a lens optical system, a reflection optical system, or a combination thereof.

On a road face 10, formed is a pattern (figure) PTN with the road projection beam BM emitted from the high-definition lamp unit 110. The pattern PTN may be given by figure information or character information, whose shape and meaning are not limited in the present disclosure.

The light distribution pattern PTN represents an intensity distribution of the beam on the road face 10, and corresponds to an on/off pattern of the pixels PIX of the light-emitting element array 112. Note that the correspondence between the position of a certain pixel PIX, with an illumination area on the road face 10 ascribed to the pixel, is determined by the illumination optical system 114, and may be occasionally given in a mirror image relation (left-right inversion), up-down inversion, or up-down and left-right inversion.

The sensor 120 is provided to enable detection of the vibration of a vehicle body on which the lamp system 100 is mounted. The sensor 120 usable herein may be a three-axis gyro sensor, for example. The sensor 120 may be provided on the head lamp side or on the vehicle side. When provided on the head lamp side, the sensor 120 may be incorporated in a housing (lamp body) of the head lamp, or may be externally attached to the lamp body. When provided on the vehicle side, the sensor 120 may be arranged in a vehicle cabin, or may be arranged outside the vehicle cabin, for example, in an engine room.

An automobile will vary the angle of inclination in the front-rear direction (vehicle posture), depending on weight balance between the front and rear. The angle of inclination will also change in response to irregularity or step on the road face during travel. The angle of inclination in the front-rear direction corresponds to rotation about a horizontal axis that extends in the transverse direction of the vehicle body, and is referred to as pitch angle (or posture angle) θp.

The controller 200 acquires a source image IMGO that specifies the pattern PTN to be projected on the road face. For example, the controller 200 may have a nonvolatile memory that stores a plurality of source images IMGO corresponding to a plurality of patterns PTN. The controller 200 then may determine any pattern PTN to be projected with reference to information INFO from the vehicle, and may acquire any source image IMGO that corresponds to such pattern PTN. Alternatively, the information INFO from the vehicle may be data of the source image IMGO. That is, the source image IMGO may be generated anywhere.

The controller 200 generates an input image IMG1 to be supplied to the high-definition lamp unit 110, with reference to the source image IMGO. For example, the input image IMG1 is given by a monochrome image data in which a pixel group contained in the pattern PTN has a value of 1, meanwhile the other pixel group has a value of 0. Upon reception of the input image IMG1, the light-emitting element array 112 turns on the pixel group (ON-pixel group) PG_ON that corresponds to the pattern PTN from among the pixels PIX, and turns off the remaining pixels.

The controller 200 subjects each of the figures contained in the source image IMGO, to correction for narrowing the dimension in the direction of the vibration, and outputs the corrected image as the input image IMG1.

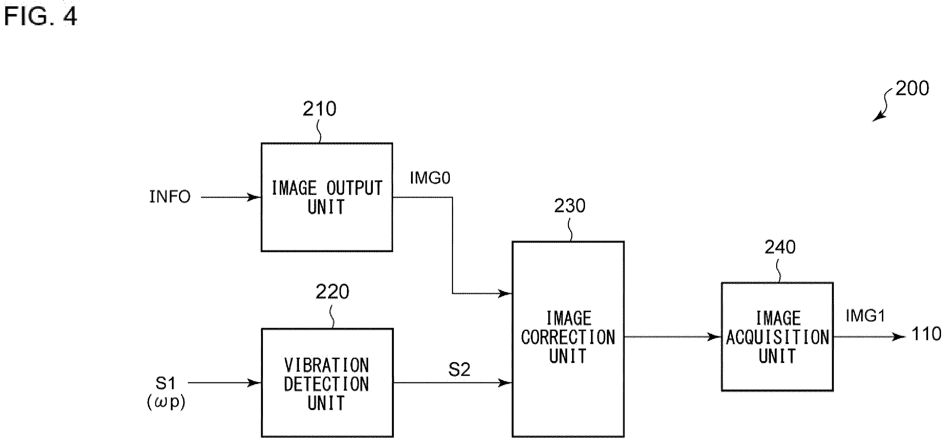

Fig. 4 is a block diagram of the controller 200 according to one Example. The controller 200 has a vibration detection unit 210, an image acquisition unit 220, an image correction unit 230, and an image output unit 240. The vibration detection unit 210 is structured to detect vibration of the vehicle body, with reference to output S1 of the sensor 120. The vibration detection unit 210 is structured to output a signal S2 that indicates necessity of correction or a degree of correction, to the image correction unit 230.

The image acquisition unit 220 is structured to acquire the source image IMGO, with reference to the information INFO from the vehicle. If the signal S2 from the vibration detection unit 210 indicates necessity of the correction, the image correction unit 230 corrects the source image IMGO and outputs a corrected image. If no vibration is detected, the image correction unit 230 outputs the source image IMGO without correction. The image output unit 240 is an interface for image transmission, which may be serial or parallel. The image output unit 240 supplies, as the input image IMG1, the image thus corrected (or not corrected) by the image correction unit 230, to the high-definition lamp unit 110.

The structure of the lamp system 100 has been described above. Next, operations thereof will be explained.

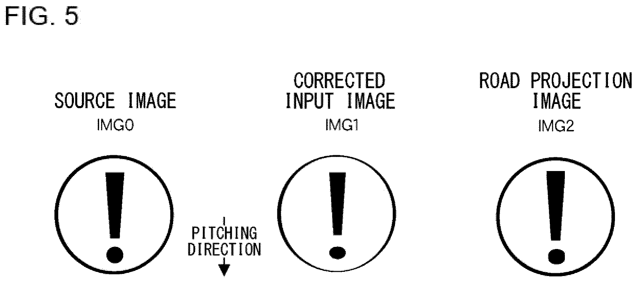

Fig. 5 is a diagram for explaining a correction process by the controller 200. Fig. 5 illustrates the source image IMGO, the corrected input image IMG1, and an image IMG2 projected on the road face. The source image IMGO in this example contains three parts A, B, and C. Upon detection of the vibration in the pitching direction, the controller 200 reduces the dimension in the pitching direction (that is, length or width), for each of the three parts A, B, and C. During illumination of the road face with the beam BM with reference to the input image IMG1, vibration of the beam BM in the pitching direction will cause parts A', B', and C' of the input image IMG1 to swell in the pitching direction. This approximates the image IMG2 projected on the road face as the source image IMGO.

The operation of the lamp system 100 has been described above. With the lamp system 100, the source image is corrected upon vibration of the vehicle body, while preliminarily taking the vibration-induced swelling of the figure into consideration, then the beam based on the corrected input image IMG1 is projected to the road face, thus making it possible to approximate an image actually projected on the road face as the source image IMGO, and to improve the visibility.

Next, an image correction process by the controller 200 will be described. Function of the controller 200 may be implemented by software processing, hardware processing, or a combination of software processing and hardware processing. The software processing may be specifically implemented by combining a processor (hardware) such as central processing unit (CPU), micro processing unit (MPU), or microcontroller, with software program run on the processor (hardware). The controller 200 may be implemented by a combination of a plurality of processors (microcontrollers).

The hardware processing is specifically implemented by hardware such as application specific integrated circuit (ASIC), controller IC, or field programmable gate array (FPGA).

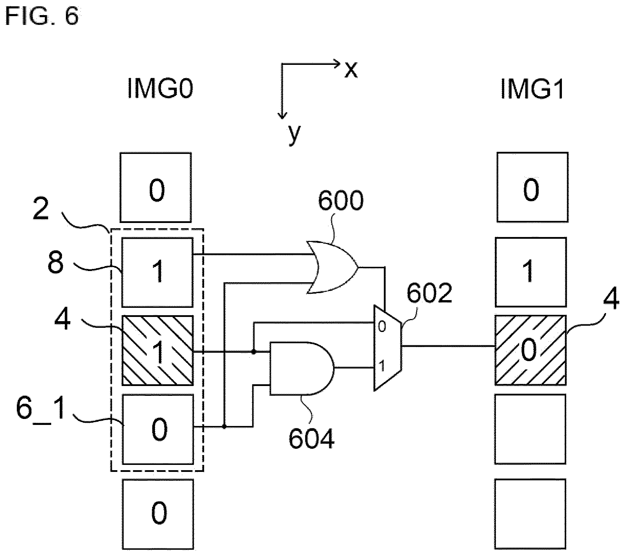

Fig. 6 is a diagram for explaining a correction process (shrinking) for one-pixel reduction. Fig. 6 illustrates a part of one column of the source image IMGO, and a corrected image IMG1 corresponding thereto. The direction of the vibration lies in the row direction (y). The correction process is applied to all the pixels, while exploring any target pixel (pixel-of-interest) in the longitudinal direction and the transverse direction of the image.

If both pixels adjoining to a pixel-of-interest 4 on both sides in the direction of the vibration have a pixel value of zero, then the value of the pixel-of-interest 4 will be maintained. This successfully prevents a bright spot of one pixel from disappearing.

If at least one of the pixels adjoining to the pixel-of-interest 4 on both sides in the direction of the vibration has a pixel value of 1, the value of each pixel of the input image IMG1 will be given by a logical product of the value of the corresponding pixel in the source image IMGO, and value(s) of n (n ≥ 1) pixel(s) adjoining thereto in the direction of the vibration (Y-direction in the diagram).

This process takes place in a window 2. The window 2 is indicated by a rectangle that includes the pixel-of-interest 4, n pixel(s) 6_1 to 6_n adjoining to the pixel-of-interest 4 in the direction of the vibration (row direction y), and one pixel 8 adjoining to the pixel-of-interest 4 on the opposite side. In this case with n = 1, the window 2 contains three pixels in the row direction. For the opposite direction of the vibration, it suffices to invert the window 2 up and down.

First, reference will be made on values of the two pixels 8 and 6_1 arranged while placing the pixel-of-interest 4 in between. If both values were zero, then the value of the pixel-of-interest 4 in the corrected image IMG1 will be equal to the value of the pixel-of-interest in the source image IMGO. This process is represented by an OR gate 600 and a selector 602, in the diagram.

If at least either the pixels 8 or the pixel 6_1 had a value of 1, the pixel-of-interest 4 in the corrected image IMG1 will have a value that is derived from the pixel values of the pixel-of-interest 4 and the pixel 6_1. More specifically, the pixel-of-interest 4 after the image processing will have a logical product of the pixel-of-interest 4 and the pixel 6_1. This process is represented by an AND gate 604, in the diagram. In this example, the logical product (output of the AND gate 604) will be given by 0, and the pixel-of-interest 4 in the corrected image IMG1 will therefore be zeroed.

The window 2 sequentially shifts while being scanned firstly in the first row from the left end to the right end in the column direction, and upon arrival at the right end, then jumps to the next row. The scanning comes to the end upon arrival of the pixel-of-interest in the window 2 at the lower right pixel of the image. Note that, during the correction, the source image IMGO before correction, and the corrected image IMG1 are stored in separate memory spaces, and the source image IMGO is always referred to for the correction.

Also note that, if the pixel-of-interest 4 resides in the first row in the source image IMGO, the pixel 8 in the window 2 will step out of the source image IMGO. The process may therefore be implemented by adding virtual 0th row to the source image IMGO. Values in the Oth row will be complementary to the values in the first row of the same column. Alternatively, the pixel-of-interest may be scanned below the second row, while leaving the first row uncorrected.

Similarly, if the pixel-of-interest 4 resides in the last row in the source image IMGO, the pixel 6 in the window 2 will step out of the source image IMGO. The process may therefore be implemented by adding a virtual row to the source image IMGO. Values in the thus added row will be complementary to the values in the last row of the same column. In a case with n ≥ 2, it suffices to add n rows.

The window 2 may be sequentially shifted while being scanned in the first column from the upper end to the lower end in the row direction, and upon arrival at the lower end, then jumps to the next column. The scanning comes to the end upon arrival of the pixel-of-interest in the window 2 at the lower right pixel of the image.

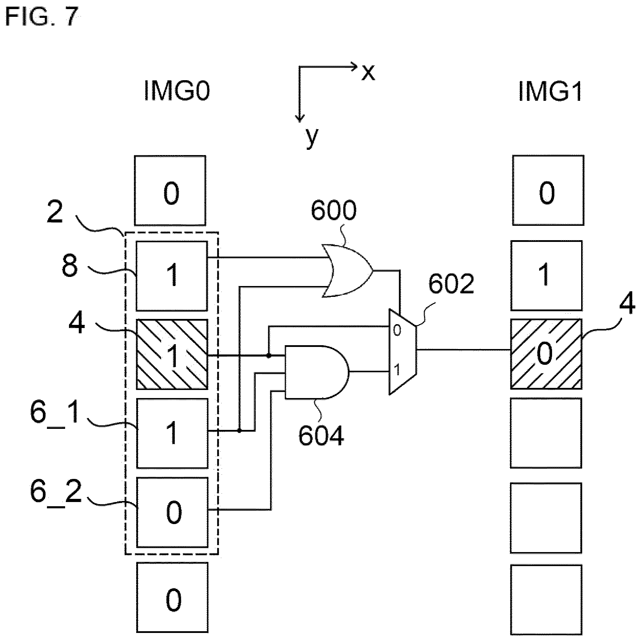

Fig. 7 is a diagram for explaining a correction process (shrinking) for two-pixel reduction. The process in this case may be implemented with n = 2. In the example of Fig. 7, the output of the AND gate 604 will be given by 0, thus the value of the pixel-of-interest will be corrected to 0. If the value of the pixel 6_2 were 1, then the output of the AND gate 604 will be given by 1, and the value of the pixel-of-interest is maintained at 1.

Refer now back to Fig. 2. The degree of size expansion in the pitching direction of the road projection image depends on the magnitude of the vibration. It is therefore recommendable for the controller 200 to adaptively change the degree of size reduction, depending on the magnitude of the vibration (amount of pitching).

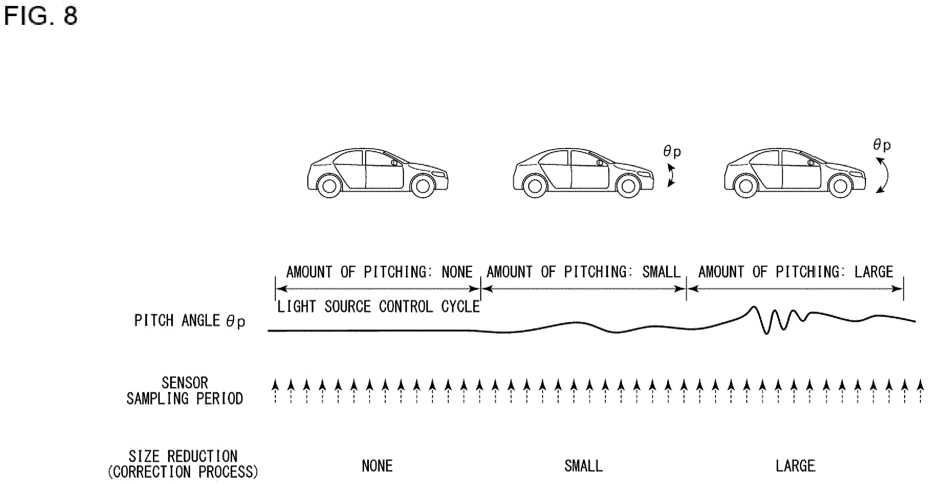

Fig. 8 is a diagram for explaining the correction process depending on the magnitude of the vibration. In a case where a gyro sensor is used as the sensor 120, angular velocity ωp about the pitch axis is detected every sampling period. The pitch angle θp is obtained by integrating the angular velocity ωp. In this example, control cycle (update cycle) of the input image IMG1 supplied to the high-definition lamp unit 110 is longer than sampling period of the sensor 120.

The controller 200 may determine the amount of correction, by detecting amplitude of an AC component of the pitch angle θp.

Alternatively, the controller 200 may determine the amount of correction with reference to the magnitude of the angular velocity ωp.

The magnitude of the vibration detected in a certain control cycle may be used as an amount of correction for the next control cycle.

If a vibration component contained in the pitch angle θ were substantially zero, the correction for size reduction will not occur. If a significant vibration component is contained in the pitch angle θ, but only at a small level, a small level of correction is applied, causing the corrected input image IMG1 narrowed by x pixels in the pitching direction, from the source image IMGO. If a significant vibration component were contained in the pitch angle θ, and at a large level, a large level of correction is applied, causing the corrected input image IMG1 narrowed by x' pixels (x' > x) in the pitching direction, from the source image IMGO.

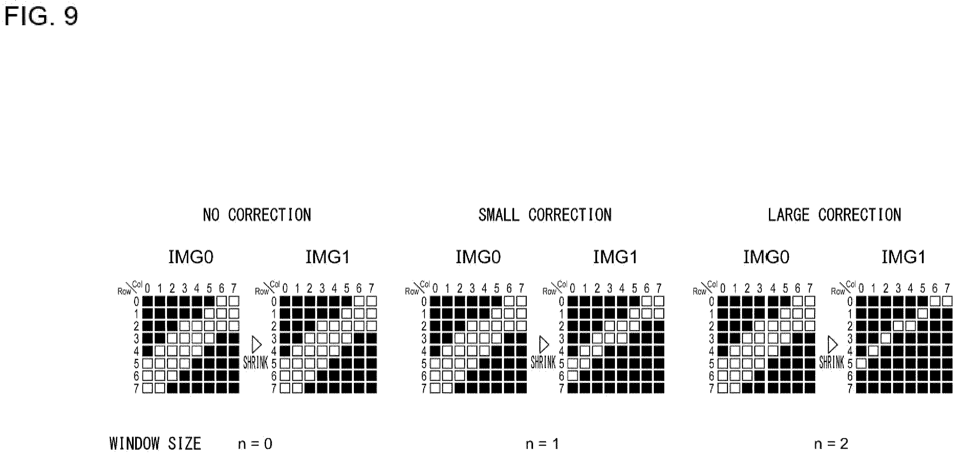

Fig. 9 is a diagram for explaining the correction process depending on the magnitude of the vibration. In a case without the correction, the degree of size reduction will be zero, making the source image IMGO and the corrected input image IMG1 identical.

In a case with a small amount of correction, a small level of correction is applied, causing the corrected input image IMG1 narrowed by x pixels (where, x = 1) in the pitching direction, from the source image IMGO.

In a case with a large amount of correction, a large level of correction is applied, causing the corrected input image IMG1 to be narrowed by x' pixels (y > x, where y = 2) in the pitching direction, from the source image IMGO.

In the process with use of the window 2 illustrated in Fig. 6, the amount of correction is controllable depending on the number n of the adjoining pixels 6.

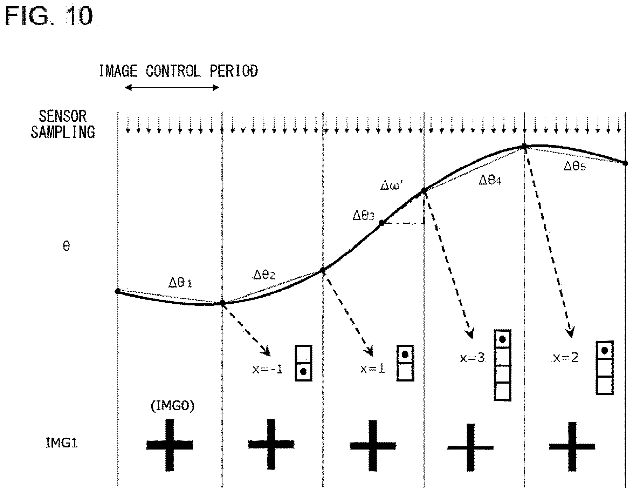

Fig. 10 is a diagram illustrating exemplary correction control. Output of the sensor is sampled at a predetermined sampling rate, and the pitch angle θ is updated every sampling rate. On the other hand, the image IMG is updated at a control cycle longer than the sampling rate of the sensor.

For example, the input image IMG1 of a certain control cycle is determined with reference to the sensor output obtained in the previous control cycle. For example, the amount of correction x of a certain i-th control cycle can be determined with reference to the pitch angle θp of the (i-1)-th control cycle. For example, the amount of correction x may be determined with reference to the amount of change Δθ in the pitch angle θp which is calculated for each control cycle. Alternatively, the amount of correction x may be determined with reference to change in the pitch angle θp within a certain short time period (several sampling periods) immediately before the end of each control cycle, that is, the angular velocity ω.

Next, Modified Examples will be described.

### (Modified Example 1)

Having described the embodiment only regarding the vibration about the pitch axis (pitching), actual motion of the vehicle body includes not only pitching, but also rotation about the roll axis and the yaw axis. For example, pitching of the vehicle body, while being inclined about the roll axis, will cause the image on the road face to fluctuate diagonally to the vehicle. The image in this case may therefore be corrected by diagonally reducing the dimension of the figure contained in the source image IMGO.

### (Modified Example 2)

Having described the embodiment regarding the control with the amount of correction varied in three levels: 0, 1, and 2, the control may rely upon a larger number of levels.

### (Modified Example 3)

Having described the embodiment with use of the two-tone images IMGO and IMG1, the present disclosure is not limited thereto. The images IMGO and IMG1 may have multiple gradations.

### (Modified Example 4)

The sensor that detects vibration is not limited to a gyro sensor. Also a vehicle height sensor for detecting vehicle height on the front and rear of the vehicle body is applicable.

Having described the present disclosure with use of specific terms referring to the embodiments, the embodiments merely illustrate the principle and applications of the present disclosure, allowing a variety of modifications and layout change without departing from the spirit of the present disclosure specified by the claims.

### INDUSTRIAL APPLICABILITY

The present disclosure relates to a vehicle lamp apparatus.

### REFERENCE SIGNS LIST

100 lamp system, 110 high-definition lamp unit, 112 light-emitting element array, 114 illumination optical system, PIX pixel, 120 sensor, 200 controller, 210 vibration detection unit, 220 image acquisition unit, 230 image correction unit, 240 image output unit

## Claims

1. A lamp system comprising:
a variable light distribution lamp including a plurality of pixels individually controllable in response to an input image, and being structured to illuminate a road face with a beam having a light distribution pattern that corresponds to states of the pixels;
a sensor structured to detect vibration of a vehicle body; and,
a controller structured to generate the input image,
wherein the controller is structured to generate the input image by narrowing a dimension of a figure contained in a source image, that specifies a pattern to be projected on the road face, in a direction corresponding to the vibration.

2. The lamp system according to claim 1, wherein the direction corresponding to the vibration is a pitching direction.

3. The lamp system according to claim 1 or 2, wherein a degree to which the dimension is narrowed is dependent on a magnitude of the vibration.

4. The lamp system according to claim 1 or 2, wherein a value of each pixel in the input image is a logical AND of a value of a corresponding pixel in the source image and values of n adjacent pixels in the direction corresponding to the vibration, where n is an integer equal to or greater than one.

5. The lamp system according to claim 4, wherein the number n dynamically changes in response to the vibration thus detected.

6. A controller structured to control a variable light distribution lamp, wherein the variable light distribution lamp includes a plurality of pixels individually controllable in response to an input image, and is structured to illuminate a road face with a beam having a light distribution pattern that corresponds to states of the pixels,
wherein the controller is structured to:
acquire a source image that specifies a pattern to be projected on the road face; and
generate the input image by narrowing a dimension of a figure included in the source image in a direction corresponding to the vibration when vibration of a vehicle body is detected.

7. A method for controlling a variable light distribution lamp, wherein the variable light distribution lamp includes a plurality of pixels individually controllable in response to an input image, and is structured to illuminate a road face with a beam having a light distribution pattern that corresponds to states of the pixels,
wherein the control method comprising:
detecting vibration of a vehicle body;
generating a source image that specifies a pattern to be projected on the road face; and
generating the input image, by narrowing a dimension in the direction of the vibration of a figure contained in the source image.

8. A program for controlling a variable light distribution lamp, wherein the variable light distribution lamp comprises a plurality of pixels individually controllable in response to an input image, and is configured to irradiate a road surface with a beam having a light distribution pattern corresponding to states of the plurality of pixels,
the program being configured to cause a processor to:
acquire information indicative of vibration of a vehicle body;
acquire a source image that defines a pattern to be drawn on the road surface; and
generate the input image by narrowing a dimension of a figure included in the source image in a direction corresponding to the vibration.
